# FASCICULE DE BREVET EUROPEEN

(11) **EP 3 507 147 B1**
(45) Date de publication et mention de la délivrance du brevet: **28.04.2021**
(21) Numéro de dépôt: 17758131.1
(22) Date de dépôt: 24.08.2017
(51) Int. Cl.: B60S 1/38

(54) **EMBOUT D'EXTREMITE INDEMONTABLE POUR BALAI D'ESSUYAGE**
NICHT ENTFERNBARES ENDSTÜCK FÜR EIN WISCHERBLATT
UNDETACHABLE END PIECE FOR A WIPER BLADE

(30) Priorité: 31.08.2016 FR 1658074
(43) Date de publication de la demande: 10.07.2019
(73) Titulaire: Valeo Systèmes d'Essuyage, 78322 Le Mesnil Saint Denis (FR)
(72) Inventeur: GAUCHER, Vincent, 63500 Issoire (FR); HOUSSAT, Stéphane, 63500 Issoire (FR); JOMARD, Olivier, 63500 Issoire (FR); POTON, Eric, 63500 Issoire (FR)
(74) Mandataire: Valeo Visibility
(86) Numéro de dépôt international: PCT/EP2017/071295
(87) Numéro de publication internationale: WO 2018/041703

(56) Documents cités:
- EP-A1- 3 366 531
- EP-A2- 3 034 366
- DE-U1-202011 003 000
- ES-U- 1 064 326

## Description

Le domaine de la présente invention est celui des balais d'essuyage utilisés sur les véhicules automobiles. L'invention concerne particulièrement un embout monté à l'extrémité d'un balai d'essuyage. L'invention vise également un balai d'essuyage et un système d'essuyage incorporant un tel balai d'essuyage.

Les véhicules automobiles sont couramment équipés de système d'essuie-glace pour assurer un balayage et un lavage du pare-brise et éviter que la vision qu'a le conducteur de son environnement ne soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans cette seconde solution, le balai est rattaché au bras tournant de l'essuie-glace par un ensemble constitué d'un connecteur mécanique et d'un adaptateur. Le connecteur mécanique est une pièce qui est sertie directement sur le balai plat, alors que l'adaptateur est une pièce intermédiaire qui permet la fixation du connecteur sur le bras de l'essuie-glace.

Le document US8857009B2 montre un balai d'essuyage équipé d'un embout d'extrémité comprenant au moins un support flexible ainsi qu'une lame destinée à être appliquée contre la vitre, l'embout d'extrémité comprenant un logement apte à recevoir une partie terminale du support flexible et au moins un moyen de verrouillage de la partie terminale du support flexible en position engagée dans le logement. L'embout d'extrémité divulgué dans ce document souffre de plusieurs inconvénients.

En premier lieu, on constate que le moyen de verrouillage peut être actionné de manière intempestive, ce qui dans certaines situations conduit à un désaccouplement de l'embout vis-à-vis du balai d'essuyage. Bien que l'accès au moyen de verrouillage soit complexifié, le moyen de verrouillage n'est pas vraiment empêché dans son mouvement.

En second lieu, la liaison mécanique entre le moyen de sécurisation et le support du balai n'est pas suffisamment assurée. Il convient d'élever le niveau de sécurité de cette liaison mécanique DE-U-202011003000 montre le préambule de la revendication 1.

Le but de la présente invention est donc de résoudre les inconvénients décrits ci-dessus en concevant un embout d'extrémité ou un balai d'essuyage qui comporte un dispositif qui sécurise la fixation du moyen de verrouillage vis-à-vis du support flexible constitutif du balai d'essuyage.

L'invention a donc pour objet un embout d'extrémité pour un balai d'essuyage d'une vitre d'un véhicule comprenant au moins un support flexible ainsi qu'une lame destinée à être appliquée contre la vitre, l'embout d'extrémité comprenant un logement apte à recevoir une partie terminale du support, l'embout comprenant au moins un moyen de verrouillage de la partie terminale du support en position engagée dans le logement, l'embout d'extrémité comprenant au moins un dispositif de sécurisation du moyen de verrouillage, le dispositif de sécurisation étant agencé pour limiter un débattement du moyen de verrouillage.

Un tout premier avantage selon l'invention réside dans l'impossibilité de déverrouiller le moyen de verrouillage de manière intempestive. On augmente ainsi très nettement le niveau de sécurisation de l'assemblage de l'embout sur l'extrémité du balai d'essuyage. Les différents composants constitutifs du balai d'essuyage comme par exemple le ou les déflecteurs d'air sont donc indémontables et ne peuvent être retirés du balai d'essuyage sans endommager celui-ci.

En outre, l'invention offre une sureté de montage accrue comparée au dispositif de l'art antérieur. Elle permet aussi de s'affranchir des problèmes de tolérances de fabrication et de montage du moyen de verrouillage. Enfin, l'invention permet globalement d'effectuer un meilleur contrôle qualité sur la ligne de montage du balai d'essuyage.

Le dispositif de sécurisation est agencé sur l'embout d'extrémité de sorte à limiter le débattement du moyen de verrouillage selon un seul sens de débattement, le moyen de verrouillage débattant dans deux sens opposés l'un à l'autre.

De manière avantageuse, le sens unique dans lequel le dispositif de sécurisation sécurise le moyen de verrouillage est un sens où le moyen de verrouillage tend à se loger dans l'encoche du support flexible.

Le moyen de verrouillage est apte à collaborer avec une encoche ménagée dans la partie terminale du support flexible en position engagée dans le logement. Le moyen de verrouillage et l'encoche ménagée dans la partie terminale du support flexible ont une forme complémentaire.

Le moyen de verrouillage est agencé pour être déformé élastiquement lors de l'insertion de la partie terminale du support flexible dans le logement de l'embout d'extrémité. La partie terminale du support flexible est insérée dans le logement de l'embout d'extrémité, entre le moyen de verrouillage et le dispositif de sécurisation. Le moyen de verrouillage est agencé pour reprendre sa forme initiale lorsqu'il est en vis-à-vis de l'encoche dans la partie terminale du support flexible. Le moyen de verrouillage est agencé pour bloquer le support flexible en translation sortant du logement de l'embout d'extrémité.

Selon un mode de réalisation, le dispositif de sécurisation limite le déplacement du moyen de verrouillage pour l'empêcher de sortir de l'encoche, une fois que le moyen de verrouillage logé dans l'encoche. Le dispositif de sécurisation peut être agencé pour empêcher totalement le mouvement du moyen de verrouillage, ou pour limiter le mouvement du moyen de verrouillage, afin d'empêcher le découplage intempestif de l'embout d'extrémité et du support flexible. Selon un autre mode de réalisation alternatif ou complémentaire, le dispositif de sécurisation bloque l'accès au moyen de verrouillage, de telle sorte qu'il devient impossible de séparer l'embout d'extrémité d'avec le support flexible, sans entraîner sa destruction.

Lors de l'utilisation d'un système d'essuyage comprenant un bras d'entrainement connecté à un balai d'essuyage comprenant au moins embout d'extrémité selon l'invention, le bras d'entrainement va transmettre un mouvement de balancier au balai d'essuyage. En conséquence, le balai d'essuyage, et plus particulièrement le support flexible exercera une contrainte sur le moyen de verrouillage de l'embout d'extrémité, par le biais de son encoche. Sous l'effet de cette force, le moyen de verrouillage sera affecté par un mouvement de débattement et/ou de déformation élastique, selon une direction ou un plan en fonction de la forme du moyen de verrouillage et/ou du mouvement subi.

Ainsi, le mouvement de débattement peut se faire selon un plan de débattement perpendiculaire au plan général d'extension du logement, et notamment par le rapprochement entre une extrémité libre du moyen de verrouillage et une face d'une enveloppe interne de l'embout d'extrémité selon ce plan de débattement. Le mouvement de débattement peut également se faire selon un arc de cercle contenu dans le plan de débattement.

Alternativement ou cumulativement, le mouvement de débattement peut se faire par une rotation autour d'un axe, cet axe étant situé à l'arête faisant la jonction entre le moyen de verrouillage et un corps de l'embout d'extrémité supportant le moyen de verrouillage.

Selon l'invention, le dispositif de sécurisation est formé au moins par une nervure qui s'étend dans un plan parallèle à un plan de débattement du moyen de verrouillage.

En fonction de l'agencement du moyen de verrouillage, le dispositif de sécurisation peut être formé en regard du moyen de verrouillage, ou sur au moins un des bords latéraux du moyen de verrouillage. La nervure peut être alignée avec le moyen de verrouillage, ou être désaxée par rapport à celui-ci.

De manière plus précise, le plan de la nervure et le plan de débattement du moyen de verrouillage sont parallèles. De manière encore plus précise, le plan de la nervure coupe une face supérieure du moyen de verrouillage. La nervure est ainsi contenue dans l'épaisseur du moyen de verrouillage. En fonction de la conformation du moyen de verrouillage, la nervure peut ainsi être disposée entre le moyen de verrouillage et l'enveloppe de l'embout d'extrémité, ou entre le moyen de verrouillage et le corps de l'embout d'extrémité.

Dans un mode de réalisation de l'invention, le moyen de verrouillage interfère avec la nervure. L'interférence du moyen de verrouillage avec la nervure peut se faire par un appui ponctuel ou un appui plan entre les deux éléments. L'interférence entre la nervure et le moyen de verrouillage diminue les déformations du moyen de verrouillage et l'empêche de sortir de l'encoche du support flexible. L'interférence peut également être prévue pour éviter les déformations plastiques ou la rupture du moyen de verrouillage. Cette interférence se produit notamment lors des mouvements du support flexible, lors de son utilisation normale ou en cas de tentative de démontage.

L'embout d'extrémité est délimité par une enveloppe. Ladite enveloppe forme une paroi externe de l'embout. Le dispositif de sécurisation, en particulier la nervure prend naissance sur une face interne de l'enveloppe. Le dispositif de sécurisation, en particulier la nervure s'étend vers l'intérieur de l'embout d'extrémité. Le dispositif de sécurisation, en particulier la nervure peut être issue de matière avec l'enveloppe, ou être rapportée sur celle-ci. S'il est rapporté, il est envisageable qu'il soit formé par moulage, au cours de la même opération que celle aboutissant à la formation de l'embout d'extrémité ou non.

Le dispositif de sécurisation limite le débattement du moyen de verrouillage dans une direction sensiblement perpendiculaire à un plan général d'extension du logement. Le dispositif de sécurisation présente la fonction de bloquer un mouvement du moyen de verrouillage selon un des sens correspondant au sens de déplacement du moyen de verrouillage. Le débattement du moyen de verrouillage peut être limité en partie ou totalement.

Le dispositif de sécurisation limite le débattement en rotation du moyen de verrouillage. Lors de l'utilisation du balai d'essuyage, le support flexible portant la lame se déplace. Ce faisant, la partie terminale du support flexible agit sur le moyen de verrouillage. En conséquence, un mouvement possible du moyen de verrouillage est une rotation, qui peut en fonction de son importance entraîner un découplage, autrement appelé séparation, de l'embout d'extrémité et du support flexible. La présence du dispositif de sécurisation permet ainsi de maintenir en position le moyen de verrouillage, ce qui en conséquence empêche le découplage de l'embout d'extrémité et du support flexible. Le débattement en rotation du moyen de verrouillage peut être limité en partie ou totalement.

Le dispositif de sécurisation peut également être agencé pour limiter le débattement du moyen de verrouillage lorsque celui-ci suit un mouvement de rotation. Le débattement du moyen de verrouillage peut être limité en partie ou totalement, dans une ou plusieurs des directions mentionnées.

Selon un autre mode de réalisation alternatif ou complémentaire, le dispositif de sécurisation limite ou bloque l'accès au moyen de verrouillage une fois la partie terminale du support flexible en place.

Dans un mode de réalisation de l'invention, le dispositif de sécurisation s'étend sensiblement perpendiculairement à un plan dans lequel s'étend majoritairement le logement et parallèlement à une direction longitudinale de l'embout d'extrémité.

Un jeu est notamment prévu entre le moyen de verrouillage et le dispositif de sécurisation. Ce jeu peut être compris entre 0.1 et 1 mm. Le jeu est prévu de manière à assurer un compromis entre aisance d'insertion de la partie terminale du support flexible dans l'embout d'extrémité et sécurisation du montage. Un jeu peu important augmente la sécurisation alors qu'un jeu plus important facilite l'insertion.

Alternativement, le dispositif de sécurisation et le moyen de verrouillage sont en contact. Le dispositif de sécurisation et le moyen de verrouillage peuvent être en contact avant l'insertion de la partie terminale du support flexible, ou après l'insertion de la partie terminale du support flexible. Le contact entre les deux éléments peut se faire par un appui ponctuel, entre une arête d'un élément et une face de l'autre, ou encore par un appui plan. Le moyen de verrouillage est ainsi limité dans son débattement par le contact immédiat avec le dispositif de sécurisation. Le contact entre le dispositif de sécurisation et le moyen de verrouillage permet d'augmenter l'impossibilité de démonter la partie terminale du support flexible d'avec l'embout d'extrémité.

Le moyen de verrouillage comprend un dispositif de blocage, ayant un profil en «L» vu dans un plan sensiblement perpendiculaire à un plan dans lequel s'étend majoritairement le logement. Le dispositif de blocage participe au maintien du moyen de verrouillage dans l'encoche de la partie terminale du support flexible. Une branche du «L» s'étend parallèlement à la direction longitudinale de l'embout d'extrémité alors qu'une seconde branche du «L» s'étend perpendiculairement à la direction longitudinale de l'embout d'extrémité. La première branche du «L» est agencée pour recouvrir, au moins en partie, une section de la partie terminale du support flexible.

Le moyen de verrouillage ou l'un de ses éléments est fabriqué dans un matériau possédant des propriétés élastiques. Le dispositif de sécurisation est fabriqué dans un matériau ou un mélange de matériau lui conférant une grande rigidité. Le dispositif de sécurisation est ainsi peu sujet aux déformations, et permet ainsi de bloquer de façon optimale le moyen de verrouillage.

L'invention a également pour objet un balai d'essuyage comprenant au moins un support flexible ainsi qu'une lame destinée à être appliquée contre la vitre, et au moins un embout d'extrémité tel que décrit précédemment, où la partie terminale du support flexible s'étend dans le logement de l'embout d'extrémité.

Plus particulièrement, le moyen de verrouillage s'étend dans l'encoche du support flexible. L'encoche du support flexible a une forme complémentaire au moyen de verrouillage.

L'invention concerne enfin un système d'essuyage d'une vitre d'un véhicule comprenant un bras et un balai d'essuyage conforme à l'aspect précédent.

D'autres caractéristiques, détails et avantages de l'invention ressortiront plus clairement à la lecture de la description donnée ci-après à titre indicatif en relation avec des dessins dans lesquels :
- la figure 1 est une vue générale, en perspective, d'un balai d'essuyage selon l'invention,
- la figure 2 est une vue en perspective de face d'un embout d'extrémité selon l'invention,
- la figure 3 est une vue en coupe de l'embout d'extrémité selon B-B,
- la figure 4 est une vue en coupe selon C-C de l'embout d'extrémité selon la figure 2 monté sur un support flexible constitutif d'un balai d'essuyage.

Il faut tout d'abord noter que les figures exposent l'invention de manière détaillée pour mettre en œuvre l'invention, lesdites figures pouvant bien entendu servir à mieux définir l'invention le cas échéant.

Dans la suite de la description, les dénominations longitudinales ou latérales, dessus, dessous, devant, derrière se réfèrent à l'orientation du balai d'essuyage ou de l'embout d'extrémité selon l'invention. La direction longitudinale correspond à l'axe principal du balai d'essuyage dans lequel il s'étend, alors que les orientations latérales correspondent à des droites concourantes, c'est-à-dire qui croisent la direction longitudinale, notamment perpendiculaires à l'axe longitudinal du balai d'essuyage dans son plan de rotation. Pour les directions longitudinales, les dénominations extérieure ou intérieure s'apprécient par rapport au point de fixation du balai d'essuyage sur un bras d'entrainement en rotation de ce balai, la dénomination intérieure correspondant à la partie où le bras et un demi-balai s'étendent. Enfin, les directions référencées comme supérieures ou inférieures correspondent à des orientations perpendiculaires au plan de rotation du balai d'essuyage, la dénomination inférieure contenant le plan du pare-brise.

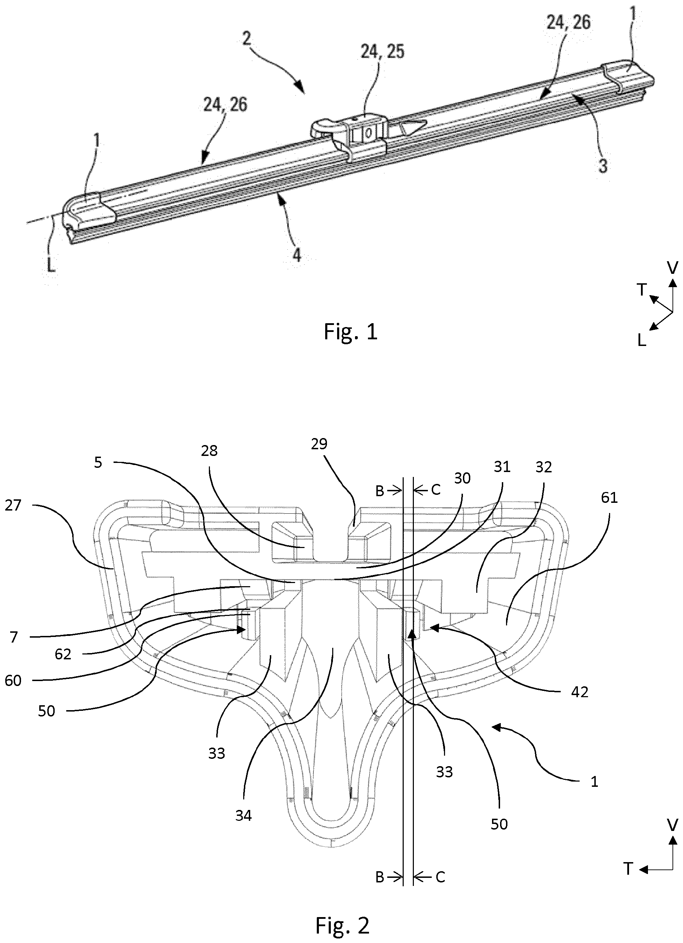

En se référant tout d'abord à la figure 1, on voit un balai d'essuyage 2 selon l'invention. Un tel balai d'essuyage 2 est utilisé pour racler une vitre d'un véhicule et déplacer hors du champ de vision d'un conducteur l'eau déposée sur cette vitre. Le balai d'essuyage 2 est constitué d'au moins un support flexible 3, un composant 24, une lame de frottement 4 et au moins un, voire deux, embouts d'extrémité 1 installés sur chaque partie terminale 6 du support flexible 3. Le support flexible 3 est un support longitudinal.

Le support flexible 3 peut prendre la forme d'une unique bande métallique plate et élastique. Selon une alternative, le support flexible 3 peut être formé par deux bandes métalliques et élastiques logées chacune dans une rainure ménagée de part et d'autre de la lame 4. Dans les deux cas ci-dessus, à l'état de repos, une telle bande métallique est courbée selon un plan perpendiculaire à une direction longitudinale de la bande. La fonction d'une telle bande métallique, qu'elle soit unique ou double, est de répartir les efforts d'appui le long de la lame 4 générés par un moyen de connexion 25 attaché au support flexible au centre, longitudinalement, du balai d'essuyage 2.

Le composant 24 désigne plusieurs types de pièce constitutive du balai d'essuyage 2. Il peut s'agir du moyen de connexion 25 destiné à relier le balai d'essuyage 2 à un bras d'entraînement en rotation de ce balai. Il peut également s'agir d'un ou plusieurs déflecteurs d'air 26 rapportés sur le support flexible 3 et dont la fonction est de transformer le flux d'air passant sur le balai d'essuyage 2 en une force d'appui qui plaque la lame 4 contre la vitre.

Le balai d'essuyage 2 comprend encore deux embouts d'extrémité 1 de constitution identique, telle que décrite ci-dessous en référence aux figures 2 à 4.

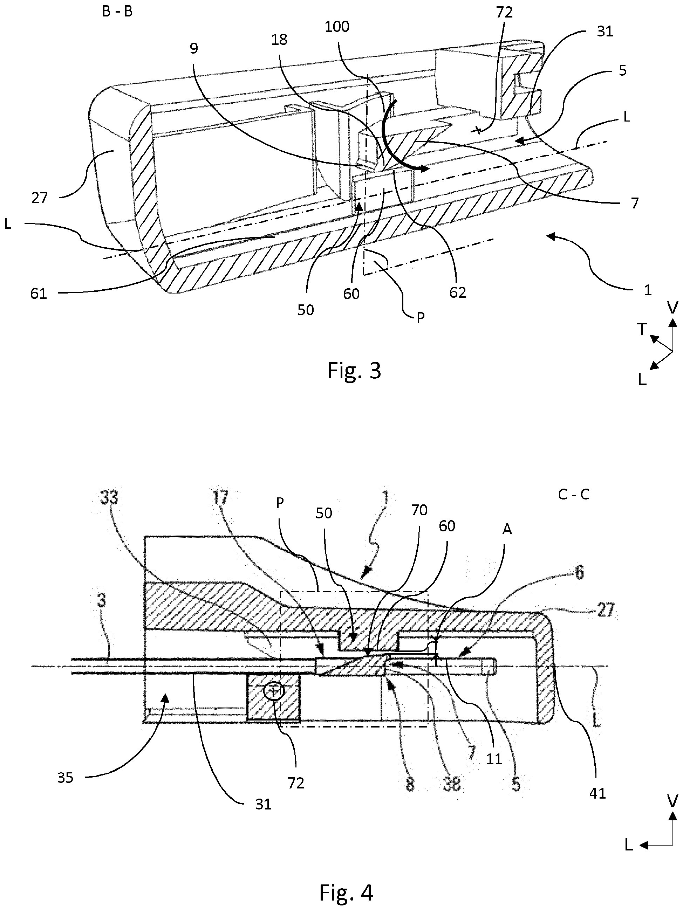

Les figures 2 et 3 montrent en perspective l'embout d'extrémité 1. Un tel embout d'extrémité 1 présente une fonction de maintien mécanique des composants constitutifs du balai d'essuyage 2. Cette embout d'extrémité 1 présente également une fonction esthétique puisqu'il permet de couvrir proprement et ainsi cacher l'extrémité de la lame 4, l'extrémité du support flexible 3 et l'extrémité du composant 24, notamment le déflecteur d'air 26.

L'embout d'extrémité 1 présente une enveloppe, formée d'une paroi extérieure 27 globalement complémentaire au profil extérieur du déflecteur d'air 26. A l'intérieur d'un volume interne 42 délimité par la paroi extérieure 27, l'embout d'extrémité 1 comprend un logement 5 de réception de la partie terminale 6 du support flexible, non représentée sur cette figure. L'embout d'extrémité 1 comprend encore une rainure 28 dont la fonction est de retenir mécaniquement un talon de la lame 4. Une telle rainure 28 est formée dans un corps 30 de l'embout d'extrémité 1, en particulier dans une partie inférieure de ce corps. Cette rainure 28 est ouverte vers l'extérieur, cette ouverture étant délimitée par deux crochets 29 qui s'étendent longitudinalement le long de l'embout d'extrémité 1.

Le logement 5 est formé dans le corps 30 de l'embout d'extrémité 1, entre la rainure 28 et la paroi extérieure 27, vu selon une direction perpendiculaire à un plan d'extension de la rainure 28. Il s'étend dans un plan général d'extension parallèle au plan d'extension de la rainure 28. Le logement 5 est délimité par une paroi de fond 31 et au moins deux bords latéraux 32, ainsi que par au moins un flanc 33, et notamment deux flancs 33. Ces flancs 33 sont formés chacun par une arête issue de matière avec la paroi extérieure 27. Les flancs 33 s'étendent dans des plans perpendiculaires à un plan dans lequel s'étend la paroi de fond 31, et ainsi parallèles à des plans d'extension des bords latéraux 32.

L'embout d'extrémité 1 comprend encore un moyen de verrouillage 7 visible sur la figure 2. Il s'agit d'un moyen dont la fonction est d'assurer la retenue de l'embout d'extrémité 1 sur le balai d'essuyage 2 selon la direction longitudinale, pour l'empêcher de de déplacer vers l'extérieur du balai d'essuyage, selon la direction longitudinale de celui-ci. Ce moyen de verrouillage 7 prend par exemple la forme d'une dent ou d'une languette au bout de laquelle est ménagée une dent, destinée à se loger dans une encoche formée sur ou dans le support flexible 3. Le moyen de verrouillage 7 est formé dans une matière ayant des propriétés élastiques. Ladite encoche sera décrite plus avant dans la partie de la description consacrée à la figure 4. Le moyen de verrouillage 7 est donc conçu pour fléchir pour autoriser l'insertion de l'extrémité longitudinale du support flexible 3 dans l'embout d'extrémité 1.

Le dispositif de sécurisation 50 selon l'invention prend par exemple la forme d'une nervure 60. En particulier, le dispositif de sécurisation 50, notamment la nervure 60 est issu de matière avec l'enveloppe 27 de l'embout d'extrémité 1. Dans l'exemple de la figure 2, le dispositif de sécurisation 50 et le moyen de verrouillage 7 sont disposés dans le même plan, c'est-à-dire que le dispositif de sécurisation 50 est disposé en regard du moyen de verrouillage 7. Dans l'exemple illustré le dispositif de sécurisation 50 est situé entre les bords latéraux 32 et les flancs 33du logement 5.

Alternativement, la nervure 60 peut être formée de manière latérale au moyen de verrouillage 7, c'est-à-dire sur le côté de celui-ci.

La nervure 60 du dispositif de sécurisation 50 a la forme d'une plaque de faible épaisseur. La nervure 60 a une première face en regard d'un plan longitudinal médian de l'embout d'extrémité 1, ce plan passant par un sommet de l'embout d'extrémité 1, et une seconde face opposée à la première, l'épaisseur de la plaque étant la dimension entre ces deux faces. Le rapport entre l'épaisseur de la nervure 60 du dispositif de sécurisation 50 et celle du moyen de verrouillage 7 est compris entre 1/4 et 1.

La nervure 60 possède une face 62, à l'opposé de la partie adjacente à la face intérieure 61 de l'enveloppe 27. La face 62 est en regard du moyen de verrouillage 7. La face 62 est parallèle à la paroi de fond 31 de l'embout d'extrémité 1. Lorsque le moyen de verrouillage 7 est animé d'un mouvement de débattement, il rentre en contact avec la face 62.

Dans l'exemple de la figure 2, l'embout d'extrémité 1 selon l'invention comporte deux dispositifs de sécurisation 50, chacun comportant une nervure 60. Les nervures 60 sont parallèles entre elles. En outre, les nervures 60 sont formées symétriquement par rapport au plan longitudinal médian précité.

Chaque nervure 60 s'étend longitudinalement sur une portion de l'enveloppe 27, cette portion étant de même longueur ou d'une longueur supérieure à celle du moyen de verrouillage 7.

En se référant maintenant à la figure 3, on peut voir illustré un exemple de débattement du moyen de verrouillage 7. La figure 3 est une coupe selon un plan B-B parallèle au plan longitudinal médian de l'embout d'extrémité et passant par un sommet de l'embout d'extrémité.

Un débattement 100 peut s'effectuer selon une direction perpendiculaire à la direction longitudinale L de l'embout d'extrémité 1, selon un arc de cercle contenu dans un plan de débattement (P) du moyen de verrouillage 7. Le moyen de verrouillage 7 tourne donc autour d'un axe référencé 72 sur les figures 3 et 4, dans le plan de débattement P. Il est en particulier prévu un jeu A entre le moyen de verrouillage 7 et le dispositif de sécurisation 50 comme illustré sur la figure 4.

L'embout d'extrémité 1 comprend une partie arrière 41 qui ferme le volume intérieur 42 de l'embout au moyen de la paroi extérieure 27. A l'extrémité opposée par rapport au logement 5 selon la direction longitudinale L visible sur les figures 1 et 4, l'embout d'extrémité 1 est ouvert et la paroi extérieure 27 délimite une zone de réception 35. Cette dernière reçoit notamment au moins un des composants du balai d'essuyage, et par exemple une extrémité du déflecteur d'air qui vient se loger dans la zone de réception 35.

Un procédé de montage d'un balai d'essuyage 2 équipé d'un embout d'extrémité 1 va maintenant être décrit.

Selon un exemple non limitatif de procédé, le balai d'essuyage 2 comprend au moins un support flexible 3 et au moins un composant 24 rapporté sur le support flexible 3. Selon un exemple de réalisation, le composant 24 peut être un ou des déflecteurs d'air 26 ou un moyen de connexion 25 destiné à relier mécaniquement le balai d'essuyage 2 à un bras d'entraînement en rotation. Le balai d'essuyage 2 mis en œuvre dans ce procédé comprend encore un embout d'extrémité 1 avec un logement 5 qui reçoit une partie terminale 6 du support flexible 3. L'embout d'extrémité 1 comprend également au moins un moyen de verrouillage 7 de la partie terminale 6 du support flexible 3 en position engagée dans le logement 5 après que celle-ci fut engagée dans le logement 5. Ce verrouillage intervient par coopération entre le moyen de verrouillage 7 et une encoche 17 ménagée dans ou sur le support flexible 3.

L'embout d'extrémité 1 comprend en outre un dispositif de sécurisation 50 du moyen de verrouillage 7, dont la fonction est de limiter ou d'empêcher le débattement du moyen de verrouillage 7, et par conséquent la translation sortante du support flexible 3 hors du logement 5 de l'embout d'extrémité 1.

L'embout d'extrémité 1 comprend un dispositif de blocage 18 du moyen de verrouillage 7 dont la fonction est de limiter la possibilité de manœuvre intempestive du moyen de verrouillage 7.

Selon une étape du procédé, on enfile l'embout d'extrémité 1 sur la partie terminale 6 du support flexible 3. De manière innovante, on contraint longitudinalement le composant 24 de sorte à ce que le dispositif de blocage 18, notamment l'élément 9, passe dans l'encoche 17. L'étape de contrainte est rendue possible par exemple en utilisant les jeux de fonctionnement et les tolérances de fabrication du ou des composants 24, ou en déformant celui-ci en particulier dans la direction longitudinale du balai d'essuyage 2. On permet ainsi à l'élément 9 de franchir l'encoche 17 pour venir se positionner sur une face 11 du support flexible 3. L'élasticité du composant, notamment le ou les déflecteurs d'air 26, garantit une force qui plaque une portion 8 du moyen de verrouillage 7 contre une tranche 38 de l'encoche 17 et ainsi un bon positionnement du dispositif de blocage 18 sur le support flexible 3. Lors des mouvements du balai d'essuyage, et notamment du support flexible 3 et de sa partie terminale 6, le moyen de verrouillage 7 subit un débattement dans une direction essentiellement perpendiculaire à la direction longitudinale L du logement 5. Le dispositif de sécurisation 50 interfère avec le débattement du moyen de verrouillage 7, l'interdisant ou le limitant, et empêche l'extraction du moyen de verrouillage 7 hors de l'encoche 17.

Le balai d'essuyage 2 ainsi équipé d'un embout d'extrémité 1 peut maintenant être monté sur un bras, permettant ainsi d'essuyer de façon efficace la vitre d'un véhicule équipé d'un tel système.

## Revendications

1. Embout d'extrémité (1) pour un balai d'essuyage (2) d'une vitre d'un véhicule, le balai d'essuyage (2) comprenant au moins un support flexible (3) ainsi qu'une lame (4) destinée à être appliquée contre la vitre, l'embout d'extrémité (1) comprenant :
- un logement (5) apte à recevoir une partie terminale (6) du support flexible (3),
- au moins un moyen de verrouillage (7) de la partie terminale (6) du support flexible (3) en position engagée dans le logement (5),
**caractérisé en ce que** l'embout d'extrémité (1) comprend au moins un dispositif de sécurisation (50) du moyen de verrouillage (7) formé par au moins une nervure (60) qui s'étend dans un plan parallèle à un plan de débattement du moyen de verrouillage (7), le dispositif de sécurisation (50) étant agencé pour limiter un débattement (100) du moyen de verrouillage (7).

2. Embout d'extrémité (1) selon la revendication précédente, **caractérisé en ce que** le moyen de verrouillage (7) est apte à collaborer avec une encoche (17) ménagée dans la partie terminale (6) du support flexible (3) en position engagée dans le logement (5).

3. Embout d'extrémité (1) selon l'une des revendications précédentes, **caractérisé en ce que** le plan de la nervure (60) coupe une face supérieure (70) du moyen de verrouillage (7).

4. Embout d'extrémité (1) selon l'une quelconque des revendications précédentes, **caractérisé en ce que** l'embout d'extrémité (1) est délimité au moins par une enveloppe (27) et **en ce que** la nervure (60) prend naissance sur une face interne (61) de l'enveloppe (27).

5. Embout d'extrémité (1) selon l'une quelconque des revendications précédentes, **caractérisé en ce que** le dispositif de sécurisation (50) limite le débattement (100) du moyen de verrouillage (7) dans une direction sensiblement perpendiculaire à un plan général d'extension du logement (5).

6. Embout d'extrémité (1) selon l'une quelconque des revendications 1 à 4, **caractérisé en ce que** le moyen de verrouillage (7) débat dans le plan de débattement (P) selon un mouvement de rotation autour d'un axe (72).

7. Embout d'extrémité (1) selon l'une quelconque des revendications précédentes, **caractérisé en ce que** le dispositif de sécurisation (50) s'étend sensiblement perpendiculairement à un plan général d'extension du logement (5) et parallèlement à une direction longitudinale de l'embout d'extrémité (1).

8. Embout d'extrémité (1) selon l'une quelconque des revendications précédentes, **caractérisé en ce qu'**il est prévu un jeu (A) entre le moyen de verrouillage (7) et le dispositif de sécurisation (50).

9. Embout d'extrémité (1) selon l'une quelconque des revendications précédentes, **caractérisé en ce que** le dispositif de sécurisation (50) et le moyen de verrouillage (7) sont en contact.

10. Embout d'extrémité (1) selon l'une quelconque des revendications précédentes, **caractérisé en ce que** le moyen de verrouillage (7) comprend un dispositif de blocage (18), ayant un profil en « L » vu dans un plan sensiblement perpendiculaire à un plan dans lequel s'étend majoritairement le logement (5).

11. Embout d'extrémité (1) selon l'une quelconque des revendications précédentes, comportant deux dispositifs de sécurisation (50), chacun comportant notamment une nervure (60).

12. Balai d'essuyage (2) comprenant au moins un support flexible (3) ainsi qu'une lame (4) destinée à être appliquée contre la vitre, et au moins un embout d'extrémité (1) selon l'une quelconque des revendications précédentes, où la partie terminale du support flexible (3) s'étend dans le logement (5) de l'embout d'extrémité (1).

13. Balai d'essuyage (2) selon la revendication précédente, **caractérisé en ce que** le moyen de verrouillage (7) s'étend dans une encoche (17) du support flexible (3).

14. Système d'essuyage d'une vitre d'un véhicule comprenant un bras et un balai d'essuyage (2) selon l'une quelconque des revendications 12 ou 13.

## Patentansprüche

1. Endstück (1) für ein Wischerblatt (2) für eine Fensterscheibe eines Fahrzeugs, wobei das Wischerblatt (2) wenigstens einen flexiblen Träger (3) sowie einen Wischergummi (4), der dazu bestimmt ist, gegen die Fensterscheibe gedrückt zu werden, umfasst, wobei das Endstück (1) umfasst:
- eine Aufnahme (5), die geeignet ist, einen Endteil (6) des flexiblen Trägers (3) aufzunehmen,
- wenigstens ein Mittel zur Verriegelung (7) des Endteils (6) des flexiblen Trägers (3) in einer Eingriffsposition in der Aufnahme (5),
**dadurch gekennzeichnet, dass** das Endstück (1) wenigstens eine Vorrichtung zur Sicherung (50) des Verriegelungsmittels (7) umfasst, die von wenigstens einer Rippe (60) gebildet wird, welche sich in einer Ebene erstreckt, die zu einer Ebene der Verlagerung des Verriegelungsmittels (7) parallel ist, wobei die Sicherungsvorrichtung (50) dazu eingerichtet ist, eine Verlagerung (100) des Verriegelungsmittels (7) zu begrenzen.

2. Endstück (1) nach dem vorhergehenden Anspruch, **dadurch gekennzeichnet, dass** das Verriegelungsmittel (7) geeignet ist, in der Eingriffsposition in der Aufnahme (5) mit einem Einschnitt (17) zusammenzuwirken, der im Endteil (6) des flexiblen Trägers (3) ausgebildet ist.

3. Endstück (1) nach einem der vorhergehenden Ansprüche, **dadurch gekennzeichnet, dass** die Ebene der Rippe (60) eine Oberseite (70) des Verriegelungsmittels (7) schneidet.

4. Endstück (1) nach einem der vorhergehenden Ansprüche, **dadurch gekennzeichnet, dass** das Endstück (1) wenigstens von einer Hülle (27) begrenzt wird, und dadurch, dass die Rippe (60) von einer Innenseite (61) der Hülle (27) ausgeht.

5. Endstück (1) nach einem der vorhergehenden Ansprüche, **dadurch gekennzeichnet, dass** die Sicherungsvorrichtung (50) die Verlagerung (100) des Verriegelungsmittels (7) in einer Richtung begrenzt, die im Wesentlichen senkrecht zu einer allgemeinen Erstreckungsebene der Aufnahme (5) ist.

6. Endstück (1) nach einem der Ansprüche 1 bis 4, **dadurch gekennzeichnet, dass** sich das Verriegelungsmittel (7) in der Verlagerungsebene (P) gemäß einer Drehbewegung um eine Achse (72) verlagert.

7. Endstück (1) nach einem der vorhergehenden Ansprüche, **dadurch gekennzeichnet, dass** sich die Sicherungsvorrichtung (50) im Wesentlichen senkrecht zu einer allgemeinen Erstreckungsebene der Aufnahme (5) und parallel zu einer Längsrichtung des Endstücks (1) erstreckt.

8. Endstück (1) nach einem der vorhergehenden Ansprüche, **dadurch gekennzeichnet, dass** zwischen dem Verriegelungsmittel (7) und der Sicherungsvorrichtung (50) ein Spiel (A) vorgesehen ist.

9. Endstück (1) nach einem der vorhergehenden Ansprüche, **dadurch gekennzeichnet, dass** sich die Sicherungsvorrichtung (50) und das Verriegelungsmittel (7) in Kontakt befinden.

10. Endstück (1) nach einem der vorhergehenden Ansprüche, **dadurch gekennzeichnet, dass** das Verriegelungsmittel (7) eine Blockiervorrichtung (18) umfasst, die ein L-förmiges Profil aufweist, in einer Ebene betrachtet, die im Wesentlichen senkrecht zu einer Ebene ist, in welcher sich die Aufnahme (5) überwiegend erstreckt.

11. Endstück (1) nach einem der vorhergehenden Ansprüche, aufweisend zwei Sicherungsvorrichtungen (50), die jeweils insbesondere eine Rippe (60) aufweisen.

12. Wischerblatt (2), welches wenigstens einen flexiblen Träger (3) sowie einen Wischergummi (4), der dazu bestimmt ist, gegen die Fensterscheibe gedrückt zu werden, und wenigstens ein Endstück (1) nach einem der vorhergehenden Ansprüche umfasst, wobei sich der Endteil des flexiblen Trägers (3) in der Aufnahme (5) des Endstücks (1) erstreckt.

13. Wischerblatt (2) nach dem vorhergehenden Anspruch, **dadurch gekennzeichnet, dass** sich das Verriegelungsmittel (7) in einem Einschnitt (17) des flexiblen Trägers (3) erstreckt.

14. Wischersystem für eine Fensterscheibe eines Fahrzeugs, welches einen Wischerarm und ein Wischerblatt (2) nach einem der Ansprüche 12 oder 13 umfasst.

## Claims

1. An end piece (1) for a vehicle window wiper blade (2), the wiper blade (2) comprising at least one flexible support (3) and a wiper rubber (4) intended to be applied against the window, the end piece (1) comprising:
- a housing (5) suitable for receiving an end portion (6) of the flexible support (3),
- at least one locking means (7) for locking the end portion (6) of the flexible support (3) in position when engaged in the housing (5),
- **characterized in that** the end piece (1) comprises at least one securing device (50) for securing the locking means (7) formed by at least one rib (60) that extends in a plane parallel to a plane (P) of movement of the locking means (7), the securing device (50) being adapted to restrict the movement (100) of the locking means (7).

2. The end piece (1) as claimed in the preceding claim, **characterized in that** the locking means (7) is adapted to cooperate with a notch (17) formed in the end part (6) of the flexible support (3) in position when engaged in the housing (5).

3. The end piece (1) as claimed in any one of the preceding claims, **characterized in that** the plane of the rib (60) intersects an upper face (70) of the locking means (7).

4. The end piece (1) as claimed in any one of the preceding claims, **characterized in that** the end piece (1) is delimited at least by an envelope (27) and **in that** the securing device (50), notably the rib (60), arises from an internal face (61) of the envelope (27).

5. The end piece (1) as claimed in any one of the preceding claims, **characterized in that** the securing device (50) restricts movement (100) of the locking means (7) in a direction substantially perpendicular to a general plane in which the housing (5) extends.

6. The end piece (1) as claimed in any one of claims 1 to 4, **characterized in that** the locking means (7) move in the plane (P) of movement with a movement in rotation about an axis (72).

7. The end piece (1) as claimed in any one of the preceding claims, **characterized in that** the securing device (50) extends substantially perpendicularly to a general plane in which the housing (5) extends and parallel to a longitudinal direction of the end piece (1).

8. The end piece (1) as claimed in any one of the preceding claims, **characterized in that** there is a clearance (A) between the locking means (7) and the securing device (50).

9. The end piece (1) as claimed in any one of the preceding claims, **characterized in that** the securing device (50) and the locking means (7) are in contact.

10. The end piece (1) as claimed in any one of the preceding claims, **characterized in that** the locking means (7) comprises an immobilizing device (18) having an "L" shape profile as seen in a plane substantially perpendicular to a plane in which the housing (5) mostly extends.

11. The end piece (1) as claimed in any one of the preceding claims, including two securing devices 50 each notably including a rib 60.

12. A wiper arm (2) comprising at least one flexible support (3) and one wiper rubber (4) intended to be pressed against the window, and at least one end piece (1) as claimed in any one of the preceding claims, where the end part of the flexible support (3) extends in the housing (5) of the end piece (1).

13. The wiper blade (2) as claimed in the preceding claim, **characterized in that** the locking means (7) extends in a notch (17) of the flexible support (3).

14. A vehicle window wiper system comprising an arm and a wiper blade (2) as claimed in either one of claims 12 or 13.
